# EUROPEAN PATENT APPLICATION

(11) **EP 4 625 294 A1**
(43) Date of publication of application: **01.10.2025**
(21) Application number: 25165000.8
(22) Date of filing: 20.03.2025
(51) Int. Cl.: G06Q 20/38, G06Q 20/18, G06Q 20/20, G07F 5/24, G07F 19/00, G07G 1/14

(54) **CASH HANDLING APPARATUS AND CASH HANDLING METHOD**

(30) Priority: 27.03.2024 JP 2024051725
(71) Applicant: GLORY LTD., Himeji-shi Hyogo 670-8567 (JP)
(72) Inventor: KANO, Aya, 670-8567 Hyogo (JP); DOI, Kazuhiro, 670-8567 Hyogo (JP); CHEN, Yang, 670-8567 Hyogo (JP); MINAGAWA, Rikuo, 670-8567 Hyogo (JP)
(74) Representative: SSM Sandmair

(57) **Abstract**

A cash handling apparatus includes a: communication unit configured to transmit/receive information to/from an external device; a cash handling unit configured to perform cash handling including a depositing process/a dispensing process; a control unit configured to control the cash handling unit to perform the cash handling; and an acquiring unit configured to acquire coupon information of a coupon used in a transaction. When the control unit has received an instruction for performing cash handling for receiving cash equivalent to the transaction amount, the control unit causes the cash handling unit to perform cash handling based on a coupon amount included in the coupon information acquired by the acquiring unit, the transaction amount, and an amount of cash deposited to the cash handling unit.

## Description

### TECHNICAL FIELD

The present disclosure relates to a cash handling apparatus used for a settlement process in a store during a transaction with a customer, and a cash handling method performed by the cash handling apparatus.

### BACKGROUND ART

Conventionally, many stores use a POS (Point of Sales) system to sell various items. For example, at a checkout counter of a store, the kind and selling price of an item to be purchased by a customer are registered by using a POS register connected to a POS server to determine a transaction amount with the customer. The payment of the transaction amount is made through electronic payment using an electronic payment terminal or cash payment using a cash handling apparatus.

In some stores, a voucher applicable to the payment of the transaction amount, a discount ticket for partial discount of the transaction amount, and the like are sometimes used. For example, Japanese Laid-Open Patent Publication No. 2013-191084 discloses a system that deals with payment of the transaction amount using a voucher.

### SUMMARY

In conventional systems, a customer informs a cashier of the use of a voucher or a discount ticket, or the cashier asks the customer whether to use the voucher or the discount ticket, and then the voucher and the discount ticket are used in the transaction. In the transaction using the voucher and the discount ticket, a part of the transaction amount is not deposited into the cash handling apparatus that expects to receive the full transaction amount. When a store starts handling of vouchers or discount tickets, the function of a POS system including a POS register and a POS server of the store needs to be updated in order to manage the inventory quantity of cash in a cash handling apparatus after a transaction using the voucher or the discount ticket.

For example, a coin depositing apparatus that receives coins from a customer and that issues, based on the deposited amount, a coupon which can be used for payment of a transaction amount, has been known. In order to enable the use of such a coupon in a store, the function of the POS system needs to be updated as in a case where the store starts handling of vouchers. Due to labor and cost for updating the system in the store, the store cannot easily introduce a new device that issues coupons.

The present disclosure is made in view of the problems, as well as other problems, in the conventional art, and the present disclosure addresses these issues, as discussed herein, with a cash handling apparatus and a cash handling method that enables the use of coupons in a store.

A cash handling apparatus according to one aspect of the present disclosure includes: a communication unit configured to transmit and receive information to and from an external device; a cash handling unit configured to perform cash handling including at least one of a depositing process and a dispensing process; a control unit configured to control the cash handling unit to perform the cash handling; and an acquiring unit configured to acquire coupon information of a coupon. The control unit receives, via the communication unit, a transaction amount of the transaction and an instruction for performing cash handling for receiving cash equivalent to the transaction amount. The control unit causes the cash handling unit to perform cash handling, based on a coupon amount included in the coupon information acquired by the acquiring unit, in addition to the transaction amount and an amount of cash deposited to the cash handling unit.

In the above configuration, if the coupon amount is equal to the transaction amount, the control unit may cause the cash handling unit not to perform cash handling. The control unit may notify, via the communication unit to the external device, that the cash handling for receiving cash equivalent to the transaction amount has been performed as instructed by the external device, and completed.

In the above configuration, if the coupon amount is less than the transaction amount, the control unit may cause the cash handling unit to perform cash handling for receiving cash equivalent to a shortfall amount obtained by subtracting the coupon amount from the transaction amount. The control unit may notify, via the communication unit to the external device, that the cash handling for receiving cash equivalent to the transaction amount has been performed as instructed by the external device, and completed.

In the above configuration, if the coupon amount exceeds the transaction amount and a setting is prepared to allow the cash handling apparatus to dispense change when a coupon, whose coupon amount exceeds the transaction amount, is used in the transaction, the control unit may cause the cash handling unit to perform cash handling for dispensing change equivalent to an amount obtained by subtracting the transaction amount from the coupon amount. The control unit may notify, via the communication unit to the external device, that the cash handling for receiving cash equivalent to the transaction amount has been performed as instructed by the external device, and completed.

In the above configuration, if the coupon amount exceeds the transaction amount and a setting has been prepared not to allow the cash handling apparatus to dispense change even when a coupon, whose coupon amount exceeds the transaction amount, is used in the transaction, the control unit may receive a selection of whether to continue or cancel use of the coupon. If a selection to continue the use of the coupon is received, the control unit may cause the cash handling unit not to perform cash handling and, notify, via the communication unit to the external device, that the cash handling for receiving cash equivalent to the transaction amount has been performed as instructed by the external device, and completed. If a selection to cancel the use of the coupon is received, the control unit may cause the cash handling unit to perform cash handling for receiving cash equivalent to the transaction amount, and notify, via the communication unit, that the cash handling for receiving cash equivalent to the transaction amount has been performed as instructed by the external device, and completed.

In the above configuration, the cash handling apparatus may further include a display unit configured to display information on a transaction. After the control unit has received the instruction for performing the cash handling for receiving cash equivalent to the transaction amount, the control unit may cause the display unit to display a screen for prompting input of coupon information by using the acquiring unit, and identify the coupon amount, based on the coupon information input by using the acquiring unit.

In the above configuration, the cash handling apparatus may further include a display configured to display a screen for prompting input of coupon information. The control unit may identify the coupon amount, based on the coupon information input by using the acquiring unit before the control unit receives the instruction for the cash handling for receiving cash equivalent to a transaction amount.

In the above configuration, the coupon handling unit may include a reader, and the control unit may identify the coupon amount, based on the coupon information read from the coupon by the reader.

In the above configuration, the cash handling apparatus further includes an operation unit configured to receive an operation performed by a customer. The control unit may cause the reader to start reading the coupon information, based on an operation performed by using the operation unit.

In the above configuration, the control unit may cause the reader to read a coupon number from a coupon. The control unit may acquire the coupon amount based on the coupon number, via the communication unit, from an external device storing therein coupon data in which coupon amounts of a plurality of coupons are registered in association with coupon numbers of the respective coupons, and identify the coupon amount.

In the above configuration, in the coupon data, change dispensing permission information indicating whether or not dispensing of change is allowed when a coupon amount exceeds a transaction amount, may be registered in association with a coupon number of each coupon. The control unit may acquire the change dispensing permission information corresponding to the coupon number of the coupon to be used in the transaction, and determine whether or not to dispense change in the cash handling performed for the transaction, based on the acquired change dispensing permission information

In the above configuration, in the coupon data, availability information indicating whether or not a coupon has been used may be registered in association with a coupon number of each coupon. The control unit may notify a coupon number of the coupon that has been used in the transaction, via the communication unit, whereby the availability information corresponding to the coupon number may be updated to used.

In the above configuration, the coupon may be a coupon issued by a coin depositing apparatus configured to receive coins deposited by a customer and store the coins in the coin depositing apparatus. A coupon amount based on a total amount of the coins deposited in the coin depositing apparatus by the customer may be given to the coupon.

In the above configuration, the cash handling apparatus is configured to receive coins deposited by a customer and store the coins in the cash handling unit, and issue the coupon whose coupon amount is given based on a total amount of the coins deposited in the cash handling unit by the customer.

A cash handling method according to one aspect of the present disclosure is performed by a cash handling apparatus used for settlement of a transaction amount. The cash handling method includes: receiving, via a communication unit, a transaction amount and an instruction for executing cash handling for receiving cash equivalent to the transaction amount; acquiring, by an acquiring unit, coupon information of a coupon to be used for payment of the transaction amount; and performing, by a cash handling unit, cash handling, based on a coupon amount included in the coupon information acquired by the acquiring unit, the transaction amount, and an amount of cash deposited to the cash handling unit.

In the cash handling apparatus according to the present disclosure, the use of coupons in a store can be easily realized. The use of coupons is enabled, thereby improving convenience for customers in the store.

### BRIEF DESCRIPTION OF THE DRAWINGS

FIG. 1 is a schematic diagram illustrating an outline of a transaction system 1 including a cash handling apparatus according to an embodiment;
FIG. 2 is a block diagram showing an example of a configuration of the transaction system;
FIGS. 3A and 3B are schematic cross-sectional views showing examples of internal configurations of a banknote handling unit and a coin handling unit in the cash handling apparatus, and FIG. 3C is a schematic cross-sectional view showing an example of an internal configuration of a coin handling unit in a coin depositing apparatus;
FIG. 4 shows an example of coupon data managed by a coupon management apparatus;
FIG. 5 is a flowchart showing a flow of handling performed in the transaction system;
FIGS. 6A, 6B, 6C, and 6D each show an example of a screen displayed on a coupon handling apparatus;
FIG. 7 is a flowchart showing a flow of cash handling performed by the cash handling apparatus;
FIG. 8 illustrates specific examples of transactions including cash handling performed by the cash handling apparatus; and
FIGS. 9A, 9B, and 9C each show an example of a screen displayed on an operation/display unit of the coupon handling apparatus during cash handling.

### DESCRIPTION OF EMBODIMENT

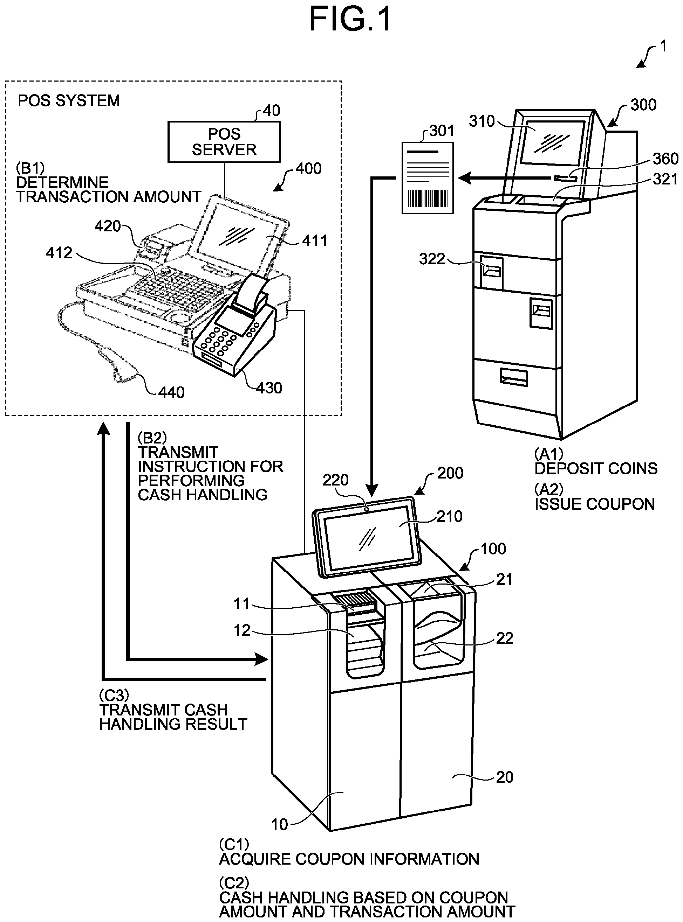

Hereinafter, a cash handling apparatus and a cash handling method according to the present disclosure will be described with reference to the accompanying drawings. FIG. 1 is a schematic diagram illustrating an outline of a transaction system 1 including a cash handling apparatus 100 according to the present embodiment. The transaction system 1 is used by a store for a transaction with a customer. Although the object of transaction is not particularly limited, the description will be continued with a store that sells items to customers, as an example.

The transaction system 1 includes a POS server 40, a POS register 400, the cash handling apparatus 100, a coupon handling apparatus 200, and a coin depositing apparatus 300. The POS register 400 is communicably connected to the POS server 40 and the cash handling apparatus 100. The cash handling apparatus 100 is communicably connected to the coupon handling apparatus 200. Although the number of the cash handling apparatuses 100, the coupon handling apparatuses 200, the coin depositing apparatuses 300, and the POS registers 400 installed in a store is not particularly limited, the description will continue with a configuration including one cash handling apparatus 100, one coupon handling apparatus 200, one coin depositing apparatus 300, and one POS register 400.

The coin depositing apparatus 300 is a cash handling apparatus that receives coins brought and deposited by a customer in a store, and that issues a coupon that can be applied to payment of the monetary amount of a transaction with the customer who purchases an item in a store.

When the customer has put coins into a coin inlet 321 of the coin depositing apparatus 300, the coin depositing apparatus 300 performs a depositing process of recognizing and counting the coins, and storing the coins in the apparatus (A1). The coin depositing apparatus 300 displays the total amount of the coins and a coupon amount obtained by subtracting a fee from the total amount, on an operation/display unit 310. When the customer, after confirming information on the display, has performed an operation of approving the monetary amounts through the operation/display unit 310, the coin depositing apparatus 300 issues a coupon 301 from a coupon issuance unit 360 (A2). The customer can receive the coupon and use a coupon amount assigned to the coupon 301, as cash, to purchase an item in the store.

For example, the coupon issuance unit 360 includes a printer, and issues the coupon 301 on which information about the coupon 301 is printed. The information including a deposited amount, a coupon amount, and an expiration date of the coupon 301 is printed on the coupon 301. Additionally, code information that encodes predetermined information is printed on the coupon 301. For example, the predetermined information, including a coupon amount assigned to the coupon 301 and an expiration date of the coupon 301, is encoded into the code on the coupon 301. The kind of the code is not particularly limited. The code may be an alphanumeric code composed of alphanumeric characters, or a graphic code such as a barcode or a two-dimensional code. Hereinafter, the description will be continued with a case where the code information is in the form of a barcode, as an example.

A customer who has received the coupon 301 selects an item for purchase in a store. The customer moves to a checkout counter while carrying the item for purchase. A transaction amount between the store and the customer is determined by using the POS register 400 installed at the checkout counter and the POS server 40 connected to the POS register 400. A method for determining the transaction amount by using a POS system including the POS register 400 and the POS server 40 has been conventionally known. For example, the name and the selling price of the item are registered to the POS system through an operation in which a cashier of the store uses a barcode reader 440 of the POS register 400 to scan a barcode attached to the item, whereby the item price to be paid by the customer, that is, the transaction amount, is determined (B1). The determined transaction amount is displayed on a display unit 411 of the POS register 400, and a payment process of receiving the transaction amount from the customer is started.

An electronic payment terminal 430 and the cash handling apparatus 100 are connected to the POS register 400. The customer selects to pay the transaction amount either through electronic payment using the electronic payment terminal 430 or by cash using the cash handling apparatus 100.

The customer who has selected the electronic payment operates the electronic payment terminal 430 and pays the transaction amount. The kind of the electronic payment is not particularly limited. Conventional electronic payment using a credit card, a debit card, electronic money, or the like may be made through the electronic payment terminal 430. After completing the electronic payment, a receipt on which the content of the transaction is printed is issued from a receipt printer 420 of the POS register 400, and the transaction with the customer ends. When the transaction amount is paid by using only the POS register 400 and the electronic payment terminal 430 without the cash handling apparatus 100, a conventional settlement process is performed without using the coupon 301.

When the customer has selected cash payment, the customer can pay a part or all of the transaction amount using the coupon 301 issued by the coin depositing apparatus 300. For example, in a case of the cash payment, when the cashier has performed a predetermined operation on an operation unit 412 of the POS register 400, an instruction to perform cash handling for receiving cash equivalent to the transaction amount from the customer is transmitted from the POS register 400 to the cash handling apparatus 100 (B2). That is, the instruction to perform cash handling for settling the transaction amount specified by the POS system, is transmitted from the POS system to the cash handling apparatus 100 connected to the POS system.

In a case where the customer does not use the coupon 301, the cash handling apparatus 100 including the banknote handling unit 10 and a coin handling unit 20 is used to perform a payment process by cash. Specifically, when the customer has deposited banknotes through a banknote inlet 11 and coins through a coin inlet 21, the cash handling apparatus 100 recognizes and counts the banknotes and the coins, and calculates a deposited amount. If the deposited amount, which is a total amount of deposited banknotes and coins, exceeds the transaction amount, the cash handling apparatus 100 dispenses change. The banknotes for the change are dispensed from a banknote outlet 12, and the coins for the change are dispensed from a coin outlet 22. After the cash handling, the cash handling apparatus 100 notifies the POS register 400 that the instructed cash handling has been completed. Then, the POS register 400 issues a receipt from the receipt printer 420, and the transaction with the customer ends. For example, a transaction amount, a cash amount deposited in the cash handling apparatus 100 by the customer, and a change amount dispensed by the cash handling apparatus 100 are printed on the receipt.

The cash handling apparatus 100 has one feature that enables a settlement process in which a coupon 301 can be used during the cash payment for receiving the transaction amount. In a case where the customer uses the coupon 301, the cash handling apparatus 100 acquires information from the coupon 301 by using the coupon handling apparatus 200 (C1), and performs cash handling based on the coupon amount and the transaction amount (C2).

The coupon handling apparatus 200 connected to the cash handling apparatus 100 includes an operation/display unit 210 and a reading unit 220. A touch panel type liquid crystal display device may be used as the operation/display unit 210. The reading unit 220 reads information from the coupon 301. The coupon handling apparatus 200 functions as a coupon handling unit used by the cash handling apparatus 100 to handle the coupon 301. The coupon handling apparatus 200 functions as an acquiring unit to acquire coupon information from the coupon 301. The operation/display unit 210 of the coupon handling apparatus 200 functions as an operation unit and a display unit of the cash handling apparatus 100.

On a screen of the operation/display unit 210 of the coupon handling apparatus 200, information instructing the customer to use the reading unit 220 to read the information from the coupon 301 is displayed. When the customer holds a barcode printed on the coupon 301 over the reading unit 220, the coupon handling apparatus 200 decodes the barcode to identify a coupon amount assigned to the coupon 301 and an expiration date of the coupon 301.

In a case where the coupon 301 has expired, the coupon handling apparatus 200 displays information indicating that the coupon 301 is invalid, on the operation/display unit 210. In this case, the cash handling apparatus 100 performs cash handling of receiving cash equivalent to the transaction amount from the customer. As described above, a depositing process of receiving cash from the customer is performed, a process of dispensing change is performed according to need, and a receipt is issued from the POS register 400, and the transaction with the customer ends.

In a case where the coupon 301 is still valid, the cash handling apparatus 100 compares the transaction amount with the coupon amount. The cash handling apparatus 100 changes the content of cash handling, based on the comparison result.

In a case where the transaction amount and the coupon amount are equal to each other, the cash handling apparatus 100 does not perform cash handling. Since the whole of the transaction amount is paid by the coupon 301, the cash handling apparatus 100 does not perform a depositing process. Since the coupon amount is equal to the transaction amount and dispensing of change is unnecessary, the cash handling apparatus 100 does not perform the dispensing process.

In a case where the coupon amount is less than the transaction amount, the cash handling apparatus 100 performs cash handling of receiving, from the customer, cash equivalent to a shortfall amount obtained by subtracting the coupon amount from the transaction amount. The cash handling apparatus 100 performs a depositing process of receiving cash equivalent to the shortfall amount. When the deposited amount exceeds the shortfall amount, the cash handling apparatus 100 performs a dispensing process of dispensing cash equivalent to a change amount obtained by subtracting the shortfall amount from the deposited amount.

In a case where the coupon amount exceeds the transaction amount, the content of cash handling to be performed by the cash handling apparatus 100 is changed depending on whether or not the store allows dispensing of change when the coupon 301 is used to pay the transaction amount. The store can set whether or not to allow dispensing of change when the coupon 301 whose amount exceeds the transaction amount is used for the transaction.

In a case where the coupon amount exceeds the transaction amount and a setting has been configured such that dispensing of change is allowed when using the coupon 301 whose amount exceeds the transaction amount, the cash handling apparatus 100 does not perform a depositing process, but only performs a dispensing process of dispensing cash equivalent to a change amount obtained by subtracting the transaction amount from the coupon amount.

In a case where the coupon amount exceeds the transaction amount and a setting has been configured such that dispensing of change is not allowed when using the coupon 301 whose amount exceeds the transaction amount, the cash handling apparatus 100 prompts the customer to select either to forgo change and continue the transaction, or to cancel the use of the coupon 301. A selection screen for receiving the choice of the customer is displayed on the operation/display unit 210 of the coupon handling apparatus 200. When the customer has selected to forgo receiving change, the whole of the transaction amount is paid by the coupon 301 and no change is dispensed from the cash handling apparatus 100. Thus, the cash handling apparatus 100 does not perform cash handling. The change foregone by the customer may be processed as a tip from the customer to the clerk, for example. On the other hand, when the customer has selected to cancel the use of the coupon 301, the cash handling apparatus 100 performs cash handling of receiving cash equivalent to the transaction amount from the customer. The cash handling is performed, as in a case where the coupon 301 is not used or the coupon 301 has expired.

In a transaction using the coupon 301, the content of handling to be performed by the cash handling apparatus 100 is changed based on the magnitude comparison result between the coupon amount and the transaction amount. However, in either case, the cash handling apparatus 100 transmits to the POS register 400, a handling result indicating that cash equivalent to the transaction amount has been received from the customer (C3). That is, even in a case where, in actually, the cash handling apparatus 100 has performed cash handling of receiving an amount different from the transaction amount from the customer or has not performed cash handling at all, the cash handling apparatus 100 returns a completion notification, to the POS system that has instructed the cash handling of the transaction amount, indicating that cash handling has been performed as instructed.

The POS register 400 that has received the completion notification from the cash handling apparatus 100 issues a receipt on which the content of the transaction is printed, from the receipt printer 420 as in the case where cash equivalent to the transaction amount has been deposited in the cash handling apparatus 100 without the use of the coupon 301, and the transaction with the customer ends.

The transaction amount, the deposited amount, and the change amount are printed on the receipt. For example, the deposited amount is the total amount of the coupon amount and the deposited amount of cash deposited in the cash handling apparatus 100 by the customer, and the change amount is the dispensed amount of cash dispensed from the cash handling apparatus 100, which will be described below in detail.

As described above, the cash handling apparatus 100 performs cash handling that deals with the use of the coupon 301, and transmits a completion notification in the same format as in a case where the customer has paid the transaction amount by only cash without using the coupon 301, to the POS register 400. The POS system receives the same completion notification as in a transaction without using the coupon 301, even when the coupon 301 has been used in the transaction. Thus, when the coin depositing apparatus 300 configured to issue a coupon 301 is newly introduced in a store that has been using a POS system including the POS register 400 and the POS server 40, a transaction using the coupon 301 can be performed by the cash handling apparatus 100 without changing the function and operation of the POS system.

In the above examples, the coupon 301 is not used in electronic payment but is used in only cash payment. However, the present disclosure is not limited thereto. For example, in a case where a conventional POS system used in a store can deal with payment in which the transaction amount can be separated into electronic payment and cash payment, the coupon 301 can also be used in a transaction including electronic payment. Specifically, when the customer who wishes to use a coupon 301 has selected electronic payment, the cashier performs an operation through the POS register 400, indicating that only a monetary amount equivalent to the coupon amount in the transaction amount is paid in the cash payment. As a result, the POS register 400 separates the transaction amount with the customer into an amount to be paid through the cash payment and remaining amount to be paid through the electronic payment, and transmits an instruction for executing cash handling of receiving cash equivalent to the coupon amount, to the cash handling apparatus 100. The cash handling apparatus 100 operates in the same manner as in the case where the transaction amount and the coupon amount are equal to each other, and transmits a completion notification of the cash handling to the POS register 400. Thus, the customer can pay a part of the transaction amount using the coupon 301, and pay the remaining amount through the electronic payment.

In the example shown in FIG. 1, a semi-self-payment method, in which the cashier in the store operates the POS register 400 and the customer deposits cash in the cash handling apparatus 100, is described. However, the payment method is not particularly limited. Even in a self-payment method in which the customer operates both the POS register 400 and the cash handling apparatus 100 connected to the coupon handling apparatus 200, the transaction using the coupon 301 can be realized as described above. Even in a full-service store in which the cashier operates both the POS register 400 and the cash handling apparatus 100 connected to the coupon handling apparatus 200, the transaction using the coupon 301 can be realized, as described above.

In the example shown in FIG. 1, the POS register 400, the coupon handling apparatus 200, and the cash handling apparatus 100 are installed independently. However, the present disclosure is not limited thereto. These three apparatuses may be integrated into a single apparatus. Any two of these three apparatuses may be integrated into a single apparatus. For example, the coupon handling apparatus 200 may be integrated with the cash handling apparatus 100 and functions as a coupon handling unit of the cash handling apparatus 100. The operation/display unit 210 of the coupon handling apparatus 200 may function as an operation unit and a display unit of the cash handling apparatus 100.

In the example shown in FIG. 1, the coin depositing apparatus 300 is installed separately from the cash handling apparatus 100; however, the cash handling apparatus 100 may also serve as the coin depositing apparatus 300. For example, the cash handling apparatus 100 may include a printer that functions as a coupon issuance unit, and may issue the coupon 301, based on a deposited amount of the coins deposited in the coin handling unit 20. Both the coin depositing apparatus 300 and the cash handling apparatus 100 may be installed separately and used in a store, and both apparatuses 100, 300 may issue coupons.

In the example shown in FIG. 1, the store selects and sets, in advance, whether or not change can be returned by cash to the customer in a transaction in which the coupon amount exceeds the transaction amount. However, options that can be set by the store may include a setting in which change is returned in the form of a coupon. Specifically, the cash handling apparatus 100 may perform one of three transactions: (i) a transaction in which change, whose amount is obtained by subtracting the transaction amount from the coupon amount, is returned by cash to the customer; (ii) a transaction in which the change is not returned to the customer; and (iii) a transaction in which the change is returned to the customer by a coupon equivalent to the change amount, not by cash. Also, in this case, the cash handling apparatus 100 performs an operation based on the setting selected in advance by the store for each of the three transactions. For example, the cash handling apparatus 100 may include a coupon issuance unit, and issue a coupon equivalent to the change amount according to need, in order to return to the customer the change in the form of the coupon.

In the example shown in FIG. 1, the coupon 301 is a piece of paper on which a coupon amount, an expiration date, code information, and the like are printed; however, the coupon 301 is not limited to a piece of paper. For example, the coupon 301 may be a card medium including a memory element such as an IC chip. In this case, the coin depositing apparatus 300 and the coupon handling apparatus 200 may each include a device that can read/write information such as a coupon amount and an expiration date from/to the memory element of the card medium, to perform above described operations. The coupon 301 may be an electronic coupon that can be transmitted and received by using a communication terminal such as a smartphone. In this case, the coin depositing apparatus 300 and the coupon handling apparatus 200 may each include a device that can deal with the electronic coupon in order to transmit and receive information such as a coupon amount and an expiration date, between the device and the communication terminal, to perform above described operations.

In the example shown in FIG. 1, a coupon amount and an expiration date are encoded and included in code information printed on the coupon 301. However, in order to prevent forgery in which the coupon amount is changed, it may be preferable that information, which can be acquired from the code information, is restricted to a coupon number as identification information of each coupon, and that the coupon amount is managed in association with coupon number separately from the code information.

Hereinafter, the specific configuration and operation of the transaction system 1 shown in FIG. 1 will be described using, as an example, a configuration in which the transaction system 1 includes a coupon management apparatus that manages information on the coupon 301 issued by the coin depositing apparatus 300.

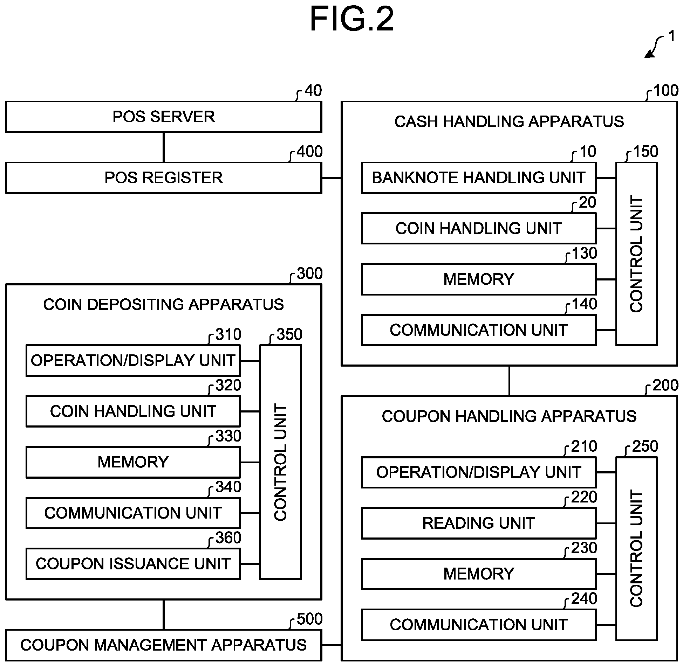

FIG. 2 is a block diagram showing an example of a configuration of the transaction system 1. The transaction system 1 shown in FIG. 2 includes a coupon management apparatus 500, in addition to the configuration shown in FIG. 1. The POS server 40 and the POS register 400 are included in the POS system which have been conventionally known.

The cash handling apparatus 100 includes the banknote handling unit 10 including the banknote inlet 11 and the banknote outlet 12, the coin handling unit 20 including the coin inlet 21 and the coin outlet 22, a memory 130, a communication unit 140, and a control unit 150. The memory 130 is a nonvolatile storage device used for storing various kinds of information necessary for the operation of the cash handling apparatus 100. The communication unit 140 is used for communicating with external devices. The external devices include the coupon handling apparatus 200 and the POS register 400. The control unit 150 controls the respective components of the cash handling apparatus 100. For example, a program corresponding to the control unit 150 is stored in advance in the memory 130 or a dedicated storage device, and this program being executed by hardware such as a CPU realizes the function and operation of the control unit 150. The control unit 150 can control the respective components based on information transmitted to and received from the coupon handling apparatus 200 and the POS register 400 via the communication unit 140, and information stored in the memory 130, whereby the function and operation of the cash handling apparatus 100, including cash handling performed by the banknote handling unit 10 and the coin handling unit 20, described in the present embodiment are realized. In the present embodiment, the function and operation of the cash handling apparatus 100 realized by the control of the control unit 150 may be sometimes simply referred to as the function and operation of cash handling apparatus 100.

The coin depositing apparatus 300 includes the operation/display unit 310, a coin handling unit 320 including the coin inlet 321 and a coin return outlet 322, a memory 330, a communication unit 340, a control unit 350, and a coupon issuance unit 360. The operation/display unit 310 includes a touch panel type liquid crystal display device, and functions as both an operation unit that receives input of various kinds of information, and a display unit that outputs and displays various kinds of information. The coupon issuance unit 360 includes a printer, and issues the coupon 301 on which a coupon amount, an expiration date of the coupon 301, and code information that encodes a coupon number are printed. The memory 330 is a nonvolatile storage device used for storing various kinds of information necessary for the operation of the coin depositing apparatus 300. The communication unit 340 is used for communicating with an external device. The external device includes the coupon management apparatus 500. The control unit 350 controls the respective components of the coin depositing apparatus 300. For example, a program corresponding to the control unit 350 is stored in advance in the memory 330 or a dedicated storage device, and the program being executed by hardware such as a CPU realizes the function and operation of the control unit 350. The control unit 350 can control the respective components based on information inputted through the operation/display unit 310, information transmitted to and received from the coupon management apparatus 500 via the communication unit 340, and information stored in the memory 330, whereby the function and operation of the coin depositing apparatus 300 described in the present embodiment are realized. In the present embodiment, the function and operation of the coin depositing apparatus 300 realized by control of the control unit 350 may be sometimes simply referred to as the function and operation of the coin depositing apparatus 300.

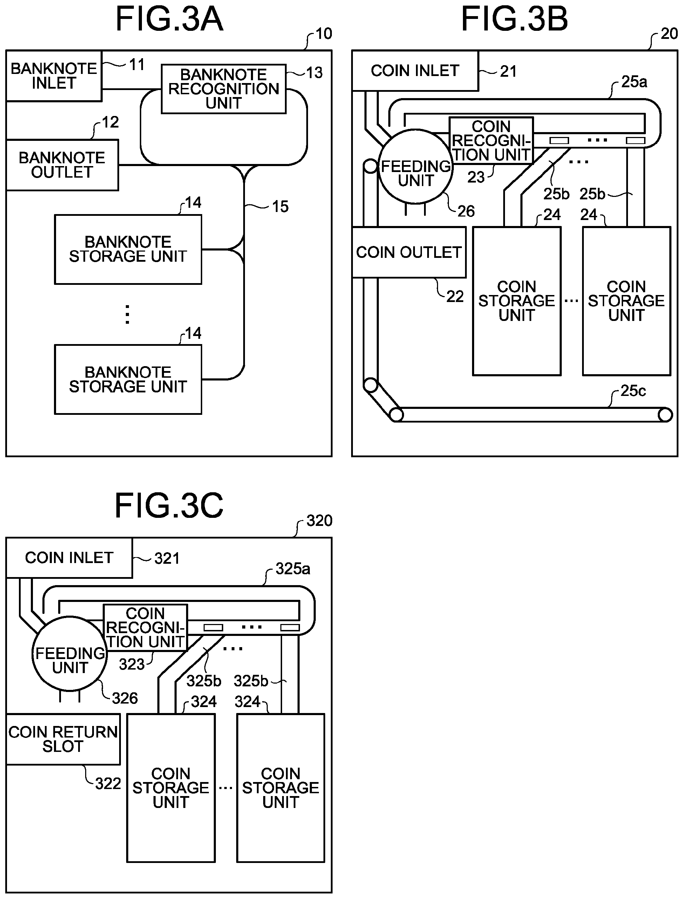

FIGS. 3A and 3B are schematic cross-sectional views showing examples of internal configurations of the banknote handling unit 10 and the coin handling unit 20 in the cash handling apparatus 100, respectively. FIG. 3C is a schematic cross-sectional view showing an example of an internal configuration of the coin handling unit 320 in the coin depositing apparatus 300.

The banknote handling unit 10 of the cash handling apparatus 100 shown in FIG. 3A can perform depositing process and dispensing process of banknotes. The banknote handling unit 10 includes the banknote inlet 11, the banknote outlet 12, the banknote recognition unit 13, the banknote storage unit 14, and the banknote transport unit 15. The banknote transport unit 15 transports banknotes along transport paths that connect the respective components shown in FIG. 3A.

In the depositing process, banknotes received in the banknote inlet 11 are fed into the apparatus and transported by the banknote transport unit 15 one by one. The banknote recognition unit 13 recognizes each banknote being transported by the banknote transport unit 15. The banknote recognition unit 13 recognizes the denomination of each banknote. The banknote recognition unit 13 may recognize the authentication and/or the fitness indicating the degree of damage of each banknote. Based on a result of recognition by the banknote recognition unit 13, the total amount of the deposited banknotes is calculated. Banknotes that cannot be deposited into the cash handling apparatus 100, among the recognized banknotes, are rejected to the banknote outlet 12, as rejected banknotes. The rejected banknotes include a banknote whose denomination cannot be recognized, and a banknote whose authentication cannot be recognized, for example. On the other hand, banknotes that can be deposited into the cash handling apparatus 100 are stored in the banknote storage unit 14. The banknote storage unit 14 performs storage and feeding-out of banknotes. FIG. 3A shows two banknote storage units 14, but the number of the banknote storage units 14 is not particularly limited. For example, the denomination to be stored is assigned to each of the banknote storage units 14, and banknotes are stored for each denomination.

In the dispensing process, banknotes to be dispensed are fed out from one or a plurality of the banknote storage units 14, and transported by the banknote transport unit 15 one by one. The banknotes transported by the banknote transport unit 15 are dispensed from the banknote outlet 12. The banknotes being transported by the banknote transport unit 15 may be recognized by the banknote recognition unit 13 before dispensing from the banknote outlet 12.

The coin handling unit 20 of the cash handling apparatus 100 shown in FIG. 3B can perform depositing process and dispensing process of coins. The coin handling unit 20 includes the coin inlet 21, the coin outlet 22, a coin recognition unit 23, a coin storage unit 24, a coin transport unit 25 (25a to 25c), and a feeding unit 26. The coin transport unit 25 includes an upper transport unit 25a, a chute 25b connecting the upper transport unit 25a and each coin storage unit 24, and a lower transport unit 25c.

In the depositing process, coins received in the coin inlet 21 are dropped into the feeding unit 26. The feeding unit 26 can receive a plurality of coins simultaneously from the coin inlet 21, and feed the coins to the upper transport unit 25a one by one. The coin recognition unit 23 recognizes coins being transported by the upper transport unit 25a. The coin recognition unit 23 recognizes the denomination of each coin. The coin recognition unit 23 may recognize the authentication and/or the fitness indicating the degree of damage of each coin. Based on a result of recognition by the coin recognition unit 23, the total amount of the deposited coins is calculated. Coins that cannot be deposited into the cash handling apparatus 100, among the recognized coins, are further transported by the upper transport unit 25a, and then rejected to the coin outlet 22, as rejected coins. The rejected coins include a coin whose denomination cannot be recognized and a coin whose authentication cannot be recognized, for example. On the other hand, coins that can be deposited into the cash handling apparatus 100 are stored in the coin storage unit 24. Specifically, when a gate, which is provided on the upper transport unit 25a so as to correspond to each chute 25b, is opened, a coin is dropped into the chute 25b, whereby each coin is stored in the coin storage unit 24. The coin storage unit 24 performs storage and feeding-out of coins. FIG. 3A shows two coin storage units 24, but the number of the coin storage units 24 is not particularly limited. For example, the denomination to be stored is assigned to each of the coin storage units 24, and coins are stored for each denomination.

In the dispensing process, coins to be dispensed are fed out from one or a plurality of the coin storage units 24 one by one, and are dropped onto the lower transport unit 25c. The lower transport unit 25c transports the coins received from the coin storage unit 24, to the feeding unit 26. After all the coins to be dispensed have been transported to the feeding unit 26, a gate provided at a bottom surface of the feeding unit 26 is opened, and the coins in the feeding unit 26 are dropped and dispensed from the coin outlet 22. Coins may be recognized by the coin recognition unit 23 before dispensing from the coin outlet 22. In this case, the coins transported to the feeding unit 26 by the lower transport unit 25c may be fed to the upper transport unit 25a by the feeding unit 26 one by one, returned to the feeding unit 26 and dispensed from the coin outlet 22 after the recognition by the coin recognition unit 23.

The coin handling unit 320 of the coin depositing apparatus 300 shown in FIG. 3C can perform depositing process of coins. The coin handling unit 320 includes the coin inlet 321, the coin return outlet 322, a coin recognition unit 323, a coin storage unit 324, a coin transport unit 325 (325a, 325b), and a feeding unit 326. The coin transport unit 325 includes an upper transport unit 325a, and a chute 325b connecting an upper transport unit 325a and each coin storage unit 324.

In the depositing process, coins received in the coin inlet 321 are dropped into the feeding unit 326. The feeding unit 326 can receive a plurality of coins simultaneously from the coin inlet 321 and can feed the coins to the upper transport unit 325a one by one. The coin recognition unit 323 recognizes the coins being transported by the upper transport unit 325a. The coin recognition unit 323 recognizes the denomination of each coin. The coin recognition unit 323 may recognize the authentication and/or the fitness indicating the degree of damage of each coin. Based on a result of recognition by the coin recognition unit 323, the total amount of the deposited coins is calculated. Coins that cannot be deposited into the coin depositing apparatus 300, among the recognized coins, are further transported by the upper transport unit 325a, and then are rejected to the coin return outlet 322 as rejected coins. The rejected coins include a coin whose denomination cannot be recognized and a coin whose authentication cannot be recognized, for example. On the other hand, coins that can be deposited into the coin depositing apparatus 300 are stored in the coin storage unit 324. Specifically, a gate, which is provided on the upper transport unit 325a so as to correspond to each chute 325b, is opened, and a coin is dropped into the chute 325b, whereby each coin is stored in the coin storage unit 324. Although FIG. 3C shows two coin storage units 324, the number of the coin storage units 324 is not particularly limited. For example, the denomination to be stored is assigned to each of the coin storage units 324, and coins are stored for each denomination.

The configurations shown in FIG. 3A and FIG. 3B are examples, and do not limit the configuration of the cash handling apparatus 100. As long as cash handling described in the present embodiment can be performed, the configuration of the cash handling apparatus 100 is not particularly limited. Similarly, the configuration shown in FIG. 3C is an example, and does not limit the configuration of the coin depositing apparatus 300. As long as coin handling described in the present embodiment can be performed, the configuration of the coin depositing apparatus 300 is not particularly limited.

As shown in FIG. 2, the coupon handling apparatus 200 includes the operation/display unit 210, the reading unit 220, a memory 230, a communication unit 240, and a control unit 250. The operation/display unit 210 including a touch panel type liquid crystal display device functions as both an operation unit that receives input of various kinds of information, and a display unit that outputs and displays various kinds of information. The reading unit 220 reads information from the coupon 301. The reading unit 220 may be a camera or a scanner. The memory 230 is a nonvolatile storage device used for storing various kinds of information necessary for the operation of the coupon handling apparatus 200. The communication unit 240 is used for communicating with external devices. The external devices include the cash handling apparatus 100 and the coupon management apparatus 500. The control unit 250 controls the respective components of the coupon handling apparatus 200. For example, a program corresponding to the control unit 250 is stored in advance in the memory 230 or a dedicated storage device, and this program being executed by hardware such as a CPU realizes the function and operation of the control unit 250. The control unit 250 can control the respective components based on information inputted through the operation/display unit 210, information acquired from the coupon 301 by the reading unit 220, information transmitted to and received from the cash handling apparatus 100 and the coupon management apparatus 500 via the communication unit 240, and information stored in the memory 230, whereby the function and operation of the coupon handling apparatus 200 described in the present embodiment is realized. In the present embodiment, the function and operation of the coupon handling apparatus 200 realized by control of the control unit 250 may be sometimes simply referred to as the function and operation of the coupon handling apparatus 200.

The coupon management apparatus 500 is a computer device including a control unit and a memory. The coupon management apparatus 500 is communicably connected to the coupon handling apparatus 200 and the coin depositing apparatus 300. The coupon management apparatus 500 stores, in the memory, information on each coupon 301 issued by the coin depositing apparatus 300 and manages the information.

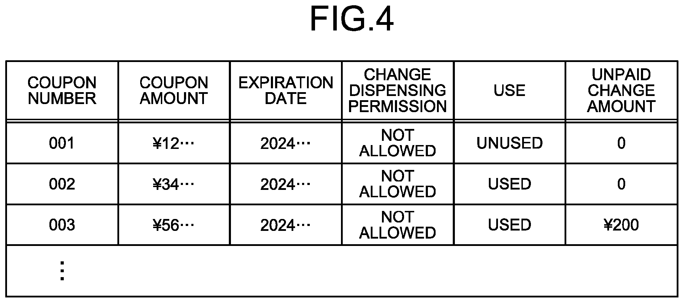

FIG. 4 shows an example of coupon data managed by the coupon management apparatus 500. The coupon data includes the items: "coupon number"; "coupon amount"; "expiration date"; "change dispensing permission"; "use"; and "unpaid change amount".

In the item "coupon number", a coupon number which is an identification number assigned to distinguish each coupon 301 is registered. In the coupon data, information on each coupon 301 is registered in association with the coupon number. The information includes a coupon amount, an expiration date, change dispensing permission, use, and unpaid change amount for each coupon 301.

In the item "coupon amount", an amount that can be covered by a coupon 301 when a customer uses the coupon 301 in a store is registered. A coupon amount assigned to the coupon 301 is determined based on the deposited amount of coins deposited in the coin depositing apparatus 300 by the customer, and a setting prepared by the store. In a case where the store has prepared a setting so as not to charge a fee, the coupon amount is the deposited amount. In a case where the setting is set to charge a fee to the customer, the coupon amount is an amount obtained by subtracting the fee from the deposited amount.

In the item "expiration date", a time limit by which the coupon 301 can be used is registered. The coupon 301 cannot be used for payment after the expiration date registered therein has passed. The expiration date is determined based on the date and time on which the customer has deposited coins in the coin depositing apparatus 300, and a setting prepared by the store. For example, the store can set the time limit to be the same day of the depositing process using the coin depositing apparatus 300 or one week from the date of the depositing process.

In the item "change dispensing permission", information indicating whether or not the store allows the cash handling apparatus 100 to return change to the customer when a coupon amount exceeds the transaction amount at the time of payment using the coupon 301, is registered. When a coupon 301, for which "allowed" is registered under the item "change dispensing permission" shown in FIG. 4, is used for payment, the cash handling apparatus 100 dispenses change if the coupon amount exceeds the transaction amount. When a coupon 301, for which "not allowed" is registered under the item "change dispensing permission" is used for payment, the cash handling apparatus 100 dispenses no change even if the coupon amount exceeds the transaction amount. The store can set not to allow dispensing of change or set to allow dispensing of change, regardless of a coupon amount. The store may prepare a condition that dispensing of change is allowed and/or a condition that dispensing of change is not allowed, such that the change dispensing permission changes based on the condition. For example, the store may prepare a threshold, and may set to allow dispensing of change based on a comparison result between the threshold and the coupon amount. The store may set not to allow dispensing of change based on the comparison result between the threshold and the coupon amount.

In the item "use", information indicating whether or not the coupon 301 has been used is registered. That is, availability information indicating whether or not the coupon 301 can be used is registered. A coupon 301, for which "unused" is registered under the item "use" shown in FIG. 4, can be used for payment in the store. When the customer has made payment using a coupon 301 with the cash handling apparatus 100, information on the coupon 301 is updated from "unused" to "used", whereby the coupon 301 can no longer be used. Thus, the same coupon 301 is prevented from being used multiple times. The example shown in FIG. 4 indicates that a coupon 301 with the coupon number "001" has not been used yet, while coupons 301 with the coupon numbers "002" and "003" have already been used.

In the item "unpaid change amount", in a case where change, which would be returned to a customer in normal cash payment, is not returned to the customer because a coupon 301 has been applied to the payment, the amount of such change is registered. Specifically, when the transaction amount has been paid using the coupon 301 whose amount exceeds the transaction amount but the cash handling apparatus 100 has dispensed no change because the store does not allow dispensing of change, the amount of such change is registered as the unpaid change amount. The example shown in FIG. 4 indicates that, in a transaction for the coupon number "003", change of 200 JPY would be returned to the customer if the customer had paid by cash equivalent to the coupon amount, but that no change had been returned to the customer because the customer had used a coupon 301 and "not allowed" is registered under the item "change dispensing permission".

The store can change setting for a coupon amount, an expiration date, and change dispensing permission for issuing the coupon 301, by operating the operation/display unit 310 of the coin depositing apparatus 300. The coin depositing apparatus 300 issues a coupon 301, based on the setting prepared by the store and a deposit amount into the coin depositing apparatus 300.

FIG. 4 is an example, and does not limit the coupon data. The coupon data may not necessarily include some of the items shown in FIG. 4, and/or may include an item that is not shown in FIG. 4. For example, the unpaid change amount may be managed in data different from the coupon data. The coupon data may further include an issue date and time, a usage date and time, etc., for the coupon 301.

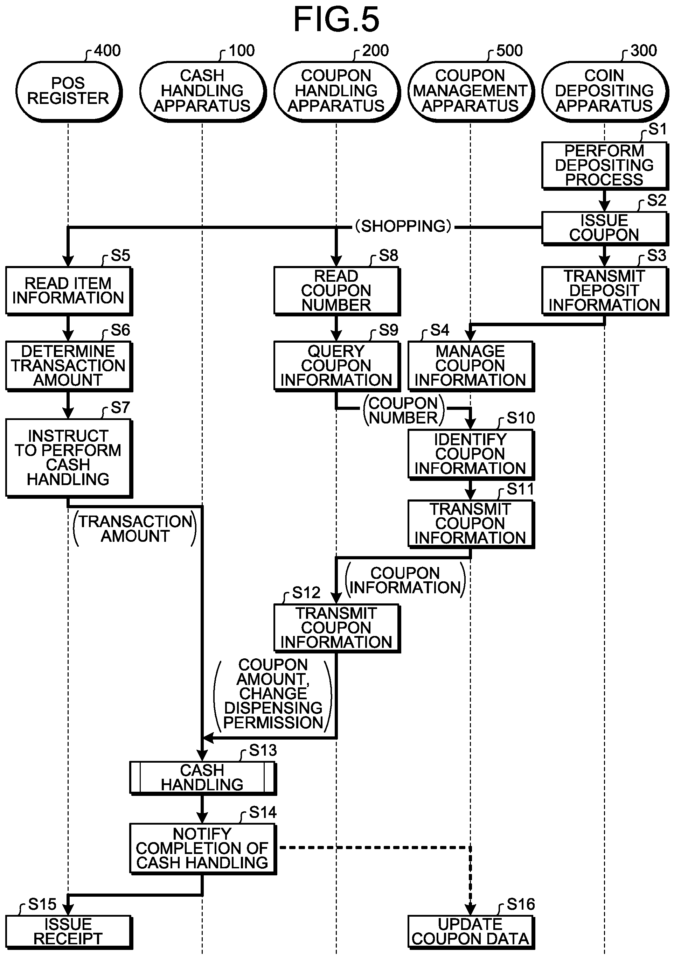

FIG. 5 is a flowchart showing an example of a flow of handling performed in the transaction system 1. Although payment can be made through electronic payment or cash payment in the transaction system 1 as described with reference to FIG. 1, FIG. 5 shows an example of a case where payment is made through cash.

When a customer has put coins into the coin inlet 321 of the coin depositing apparatus 300, and has performed a predetermined operation through the operation/display unit 310, the coin depositing apparatus 300 performs a depositing process (step S1). The coin depositing apparatus 300 issues a coupon 301 from the coupon issuance unit 360 (step S2).

The coin depositing apparatus 300 assigns a coupon number, which is identification information for identifying each coupon, to a coupon 301 to be issued. The coin depositing apparatus 300 determines a coupon amount, an expiration date, and change dispensing permission, based on the deposited amount of coins and a setting prepared in advance by a store. The coin depositing apparatus 300 issues the coupon 301 on which the coupon amount, the expiration date, and a barcode indicating the coupon number are printed. The date and time on which coins have been deposited, and the deposited amount of the coins may be printed on the coupon 301. Information regarding a setting on the change dispensing permission, that is, information indicating whether or not change is dispensed when a coupon is used, may be printed on the coupon 301.

The coin depositing apparatus 300 transmits coupon information including a coupon number, a coupon amount, an expiration date, and change dispensing permission, to the coupon management apparatus 500 (step S3). The coupon management apparatus 500 that has received the coupon information registers and manages the coupon information in coupon data (step S4). The coupon data is managed as described with reference to FIG. 4.

A setting for determining a coupon amount, an expiration date, change dispensing permission, and the like, used for issuing a coupon, may be stored in the coupon management apparatus 500, and a coupon 301 may be issued by the coin depositing apparatus 300 and the coupon management apparatus 500. For example, the coin depositing apparatus 300 transmits deposit information including a deposited amount of coins, to the coupon management apparatus 500. The coupon management apparatus 500 determines a coupon amount, an expiration date, and change dispensing permission, based on the setting for issuing a coupon and the deposited amount. The coupon management apparatus 500 assigns a coupon number to a coupon and registers the information on the coupon in the coupon data. The coupon management apparatus 500 transmits the coupon information including information registered in the coupon data, to the coin depositing apparatus 300. In this case, the coin depositing apparatus 300 only needs to issue a coupon 301, based on the coupon information received from the coupon management apparatus 500.

A customer who has received the coupon 301 can confirm a coupon amount and an expiration date from information printed on the coupon 301. The customer selects an item for purchase in the store, and then moves to a checkout counter. The cash handling apparatus 100 connected to the POS register 400, and the coupon handling apparatus 200 connected to the cash handling apparatus 100 are installed at the checkout counter.

The POS register 400 reads information on the item to be purchased by the customer (step S5) to determine transaction amount (step S6). After determining the transaction amount, the POS register 400 transmits an instruction for executing cash handling of receiving cash equivalent to the transaction amount from the customer, to the cash handling apparatus 100 (step S7).

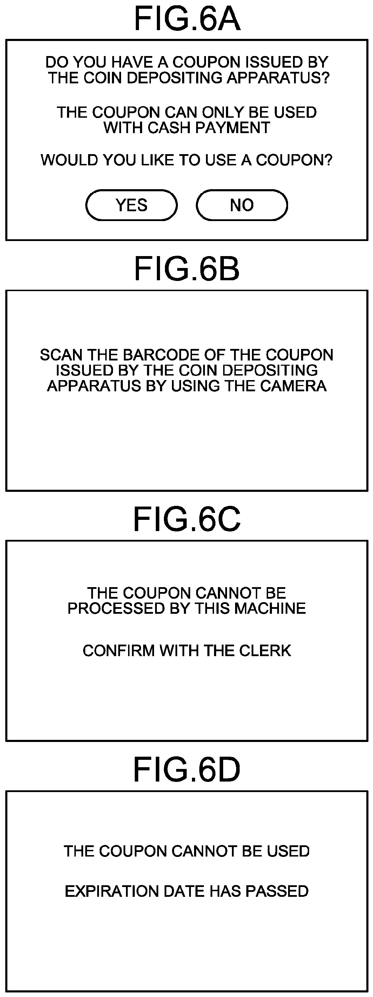

Meanwhile, in the coupon handling apparatus 200, a process of reading information from the coupon 301 is performed. FIGS. 6A to 6D each show an example of a screen displayed on the coupon handling apparatus 200. For example, as shown in FIG. 6A, a screen for asking a customer whether or not to use a coupon 301 is displayed on the operation/display unit 210 of the coupon handling apparatus 200.

Other information about the coupon 301 may be displayed on the screen. For example, in a case where the coupon 301 can only be used in cash payment, information indicating this may be displayed on the screen, as shown in FIG. 6A. In addition to cash payment, if the coupon 301 can be used in a transaction in which a part of the transaction amount is paid through electronic payment and the remainder is paid through cash payment, information indicating this may be displayed on the screen.

When the customer has performed an operation for indicating the intention to use the coupon 301 through the screen shown in FIG. 6A, a screen for instructing the customer to input a barcode (code information) printed on the coupon 301 is shown, as shown in FIG. 6B.

When the customer who has confirmed the screen shown in FIG. 6B holds the barcode printed on the coupon 301 over the reading unit 220 of the coupon handling apparatus 200, the coupon handling apparatus 200 reads the barcode (step S8 in FIG. 5).

After a coupon number has been acquired from the barcode of the coupon 301, the coupon handling apparatus 200 queries the coupon management apparatus 500 for coupon information, based on the coupon number (step S9 in FIG. 5). The coupon management apparatus 500 refers to the coupon data shown in FIG. 4 to identify the coupon information of the coupon 301 used by the customer, based on the coupon number (step S10). The coupon management apparatus 500 transmits the coupon information to the coupon handling apparatus 200 (step S11).

If the coupon number cannot be acquired from the barcode of the coupon 301 or if the acquired coupon number is not included in the coupon data, a screen for instructing the customer to confirm with a cashier is displayed on the operation/display unit 210 of the coupon handling apparatus 200, as shown in FIG. 6C. For example, when a customer has caused the reading unit 220 to read a barcode of a conventional voucher that is used after the customer informs a clerk of the use of the voucher, the screen shown in FIG. 6C is displayed. In this case, the clerk informed by the customer receives the voucher, and performs handling different from coupon handling with the coupon handling apparatus 200. For example, such a voucher is handled by the cashier operating the POS register 400.

If the coupon 301 has expired or has already been used, information indicating this is displayed on the operation/display unit 210 of the coupon handling apparatus 200. For example, information indicating that the coupon 301 cannot be used and information on the reason are displayed, as shown in FIG. 6D. In this case, cash handling in which the transaction amount is paid by cash without using the coupon 301 will be performed. The coupon management apparatus 500 may judge whether or not the coupon 301 can be used, and the judgement result may be transmitted to the coupon handling apparatus 200. Alternatively, the coupon management apparatus 500 may merely transmit the coupon information to the coupon handling apparatus 100, and the coupon handling apparatus 200 may make the judgement.

After confirming that the coupon 301 is usable, the coupon handling apparatus 200 transmits the coupon information necessary for handling the coupon 301, to the cash handling apparatus 100 (step S12 in FIG. 5). For example, the coupon amount and the change dispensing permission information are transmitted to the cash handling apparatus 100.

The execution order of the process of determining the monetary amount of a transaction with a customer (steps S5 to S7) and the process of identifying the coupon amount of the coupon 301 to be used by the customer (steps S8 to S12) is not particularly limited, and these processes may be performed in parallel or one of the processes may be performed first. Specifically, the coupon amount may be identified after an instruction for executing a cash handling has been transmitted from the POS register 400 to the cash handling apparatus 100, or the coupon amount may be identified before the cash handling execution instruction is transmitted from the POS register 400 to the cash handling apparatus 100. The customer may cause the coupon handling apparatus 200 to read the coupon 301, while the cashier is performing an operation of determining the transaction amount on the POS register 400.

The coupon information may be acquired without any operations on the POS system including the POS register 400. Specifically, after an instruction for executing a cash handling has been transmitted from the POS register 400 to the cash handling apparatus 100, the cash handling apparatus 100 may cause the coupon handling apparatus 200 to perform a process for acquiring the coupon information. For example, the cash handling apparatus 100 may cause the coupon handling apparatus 200 to display the screen shown in FIG. 6A or the screen shown in FIG. 6B, in response to the cash handling execution instruction. For another example, the cash handling apparatus 100 may start a process to acquire the coupon information by using the camera or the scanner of the reading unit 220, in response to the cash handling execution instruction.

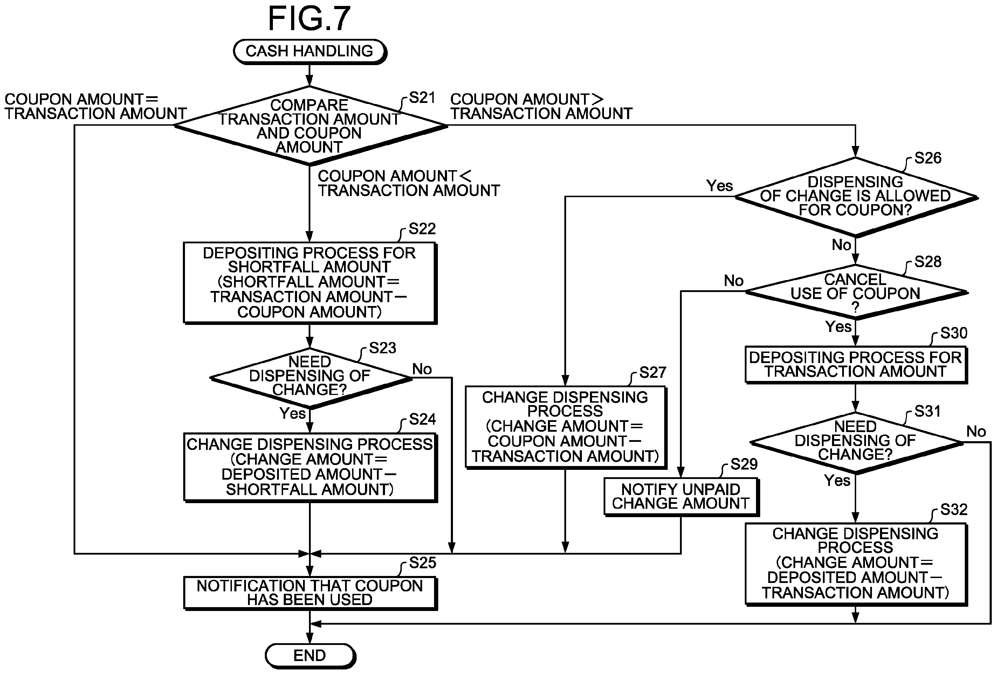

The cash handling apparatus 100 that has received the transaction amount from the POS register 400 and that has received the coupon amount and the change dispensing permission information from the coupon handling apparatus 200, performs cash handling (step S13). The cash handling apparatus 100 that has finished the cash handling transmits a completion notification to the POS register 400 (step S14). The POS register 400 that has received the completion notification issues a receipt (step S15), and the transaction with the customer ends. As indicated by a dashed line arrow in FIG. 5, the coupon data shown in FIG. 4 is updated according to need, based on the cash handling performed in the cash handling apparatus 100 (step S16). The specific description on the cash handling (step S13) and the update of the coupon data (step S16) will be made with reference to FIGS. 7, 8, and 9A-9C.

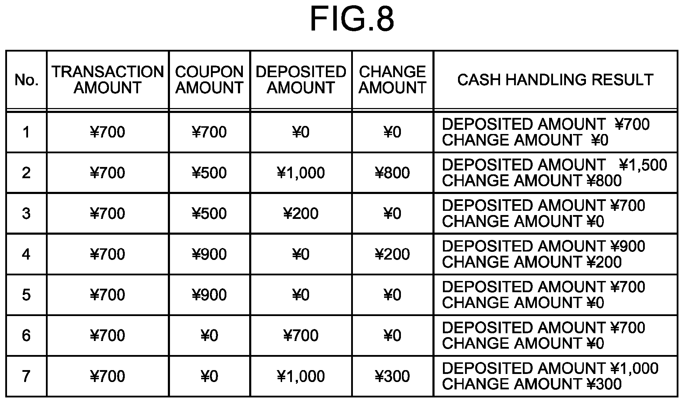

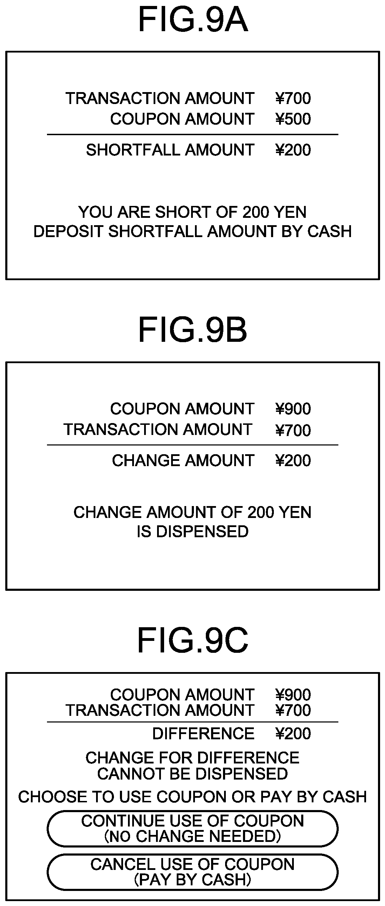

FIG. 7 is a flowchart showing an example of a flow of cash handling performed by the cash handling apparatus 100. FIG. 8 illustrates specific examples of transactions including cash handling. FIGS. 9A to 9C each show an example of a screen displayed on the operation/display unit 210 of the coupon handling apparatus 200 during cash handling.

After starting the cash handling for a transaction in which the customer uses a coupon 301, the cash handling apparatus 100 compares a transaction amount received from the POS register 400 with a coupon amount received from the coupon handling apparatus 200 (step S21 in FIG. 7).

If the coupon amount is equal to the transaction amount (step S21; coupon amount = transaction amount), the cash handling apparatus 100 does not perform cash handling. The cash handling apparatus 100 transmits a notification indicating that the coupon 301 has been used, to the coupon handling apparatus 200 (step S25), and the process ends.

After a coupon 301 has been used, a process of step S16 in FIG. 5 is performed, to update the coupon data. Specifically, the coupon handling apparatus 200 transmits a coupon number and information indicating that the coupon 301 having the coupon number has been used, to the coupon management apparatus 500. The coupon management apparatus 500 updates data registered under the item "use" corresponding to the coupon number, from "unused" to "used", in the coupon data shown in FIG. 4.

For example, as indicated in an example of transaction No. 1 in FIG. 8, if a transaction amount of 700 JPY is equal to a coupon amount of 700 JPY, both the deposited amount of cash deposited in the cash handling apparatus 100 and the change amount dispensed from the cash handling apparatus 100 are 0 JPY. Although the cash handling apparatus 100 does not perform a depositing process, the cash handling apparatus 100 transmits a cash handling result indicating that the deposited amount is 700 JPY and the change amount is 0 JPY, to the POS register 400, as shown under the item "cash handling result" shown in FIG. 8.

If the coupon amount is less than the transaction amount (step S21 in FIG. 7; coupon amount < the transaction amount), the cash handling apparatus 100 performs cash handling of receiving cash equivalent to a shortfall amount from the customer. For example, the cash handling apparatus 100 displays a screen shown in FIG. 9A on the operation/display unit 210 of the coupon handling apparatus 200. On the screen, the transaction amount, the coupon amount, the shortfall amount, and information for instructing the customer to deposit cash equivalent to the shortfall amount into the cash handling apparatus 100 are displayed.

The cash handling apparatus 100 performs a depositing process of receiving cash equivalent to a shortfall amount obtained by subtracting the coupon amount from the transaction amount, from the customer (step S22 in FIG. 7). The cash handling apparatus 100 compares the deposited amount of cash received from the customer with the shortfall amount, to judge whether or not dispensing of change is necessary (step S23).

If the deposited amount exceeds the shortfall amount (step S23; Yes), the cash handling apparatus 100 performs a dispensing process of dispensing change equivalent to the difference between the deposited amount and the shortfall amount (step S24). The change equivalent to an amount obtained by subtracting the shortfall amount from the deposited amount is dispensed from the cash handling apparatus 100. For example, as shown in an example of transaction No. 2 in FIG. 8, in a case where the customer has deposited a 1,000-JPY note into the cash handling apparatus 100 in the situation where the coupon amount of 500 JPY is less than the transaction amount of 700 JPY, the cash handling apparatus 100 dispenses change coins equivalent to 800 JPY. In this case, as a completion notification (step S14 in FIG. 5), the cash handling apparatus 100 transmits a cash handling result indicating that the deposited amount is 1500 JPY and the change amount is 800 JPY, to the POS register 400. Although the cash handling apparatus 100 has performed a depositing process for the deposited amount of 1000 JPY, the cash handling apparatus 100 transmits the completion notification indicating that the total amount of the coupon amount of 500 JPY and the deposited amount of 1000 JPY has been handled as a deposited amount. That is, the completion notification is prepared such that the completion notification indicates the change amount of 800 JPY, which has actually dispensed from the cash handling apparatus 100, has dispensed from the cash handling apparatus 100.

If the deposited amount is equal to the shortfall amount (step S23 in FIG. 7; No), the cash handling apparatus 100 dispenses no change. For example, as shown in an example of transaction No. 3 in FIG. 8, in a case where the customer has deposited coins equivalent to the shortfall amount of 200 JPY into the cash handling apparatus 100 in the situation where a coupon amount of 500 JPY is less than a transaction amount of 700 JPY, dispensing of change is not performed. In this case, as a completion notification (step S14 in FIG. 5), the cash handling apparatus 100 transmits a cash handling result indicating that the deposited amount is 700 JPY and the change amount is 0 JPY, to the POS register 400. Although the cash handling apparatus 100 has performed a depositing process for the deposited amount of 200 JPY, the cash handling apparatus 100 transmits the completion notification indicating that the total amount of the coupon amount of 500 JPY and the deposited amount of 200 JPY has been handled as a deposited amount.

After completing the cash handling, the cash handling apparatus 100 transmits a notification indicating that the coupon 301 has been used, to the coupon handling apparatus 200 (step S25 in FIG. 7), and the process ends. If the coupon 301 has been used, the process of step S16 in FIG. 5 is performed to update the coupon data, as described above.

If the coupon amount exceeds the transaction amount (step S21 in FIG. 7; coupon amount > the transaction amount), the cash handling apparatus 100 judges whether or not dispensing of change is allowed by the store (step S26). This judgement is made based on the change dispensing permission information received from the coupon handling apparatus 200 in step S12 shown in FIG. 5.

In a case where dispensing of change is allowed, that is, a case where "allowed" is set under the item "change dispensing permission" in the coupon data shown in FIG. 4 (step S26 in FIG. 7; Yes), the cash handling apparatus 100 performs a dispensing process of dispensing change equivalent to the difference between the coupon amount and the transaction amount (step S27). The change, as an excess, obtained by subtracting the transaction amount from the coupon amount is dispensed from the cash handling apparatus 100. For example, the cash handling apparatus 100 displays a screen shown in FIG. 9B on the operation/display unit 210 of the coupon handling apparatus 200. On the screen, the transaction amount, the coupon amount, the change amount, and information indicating that cash equivalent to the change amount is dispensed from the cash handling apparatus 100 are displayed. For example, as shown in an example of transaction No. 4 in FIG. 8, in a case where a coupon amount of 900 JPY exceeds a transaction amount of 700 JPY, the cash handling apparatus 100 dispenses change coins equivalent to 200 JPY. In this case, as a completion notification (step S14 in FIG. 5), the cash handling apparatus 100 transmits a cash handling result indicating that the deposited amount is 900 JPY and the change amount is 200 JPY, to the POS register 400. That is, the completion notification is prepared so as to indicate that the change amount of 200 JPY, which has actually dispensed from the cash handling apparatus 100, has been dispensed from the cash handling apparatus 100. Although the cash handling apparatus 100 does not perform a depositing process, the cash handling apparatus 100 transmits a completion notification that the coupon amount of 900 JPY has been handled as a deposited amount.

After completing the cash handling, the cash handling apparatus 100 transmits a notification indicating that the coupon 301 has been used, to the coupon handling apparatus 200 (step S25 in FIG. 7), and the process ends. If the coupon 301 has been used, a process of step S16 in FIG. 5 is performed to update the coupon data, as described above.

Meanwhile, in a case where dispensing of change is not allowed, that is, a case where "not allowed" is registered under the item "change dispensing permission" in the coupon data shown in FIG. 4 (step S26 in FIG. 7; No), the cash handling apparatus 100 prompts the customer to select whether or not to cancel the use of the coupon 301 (step S28). For example, the cash handling apparatus 100 displays a selection screen shown in FIG. 9C on the operation/display unit 210 of the coupon handling apparatus 200. On the screen, the transaction amount, the coupon amount, the difference between the transaction amount and the coupon amount, and information indicating that cash equivalent to the difference, which should be dispensed as change if the coupon 301 is not used, will not be dispensed, are displayed. In addition, buttons for selecting either to forgo receiving change and continue the use of the coupon 301, or to cancel the use of the coupon 301 and pay the transaction amount by cash, are displayed.

If the customer has selected to continue the use of the coupon 301 on the selection screen (step S28; No), the cash handling apparatus 100 performs neither a depositing process nor a dispensing process. For example, as shown in an example of transaction No. 5 in FIG. 8, although the coupon amount of 900 JPY exceeds the transaction amount of 700 JPY, both the amount deposited in the cash handling apparatus 100 and the amount of change dispensed from the cash handling apparatus 100 are 0 JPY. In this case, as a completion notification (step S14 in FIG. 5), the cash handling apparatus 100 transmits a cash handling result indicating that the deposited amount is 700 JPY and the change amount is 0 JPY, to the POS register 400. Although the cash handling apparatus 100 does not perform a depositing process and the coupon amount of 900 JPY exceeds the transaction amount of 700 JPY, the cash handling apparatus 100 transmits the completion notification indicating that the transaction amount of 700 JPY has been handled as a deposited amount.

The cash handling apparatus 100 transmits a notification that change, which would be dispensed if a normal settlement process has been performed, has not been dispensed, to the coupon handling apparatus 200 (step S29 in FIG. 7). The notification includes the change amount that has not been dispensed. A coupon number, and the change amount that has not been dispensed in a transaction using a coupon 301 having the coupon number, are transmitted from the coupon handling apparatus 200 to the coupon management apparatus 500. In the coupon data shown in FIG. 4, the change amount is registered under the item "unpaid change amount" corresponding to the coupon number. The unpaid change amount foregone by the customer may be processed as a tip from the customer to the clerk, for example. Alternatively, the cash handling apparatus 100 may include a coupon issuance unit, receive a setting in which a coupon equivalent to the unpaid change amount is provided to the customer, and issue a coupon equivalent to the unpaid change amount to the customer. In this case, on the screen shown in FIG. 9C, information indicating that a change amount obtained by subtracting the transaction amount from the coupon amount is provided in the form of a coupon, may be displayed.

After completing the cash handling, the cash handling apparatus 100 transmits a notification indicating that the coupon 301 has been used, to the coupon handling apparatus 200 (step S25 in FIG. 7), and the process ends. If the coupon 301 has been used, the notification is transmitted from the coupon handling apparatus 200 to the coupon management apparatus 500, and a process of step S16 in FIG. 5 is performed to update the coupon data, as described above.

If the customer has selected to cancel the use of the coupon 301 on the selection screen shown in FIG. 9C (step S28 in FIG. 7; Yes), the cash handling apparatus 100 performs a depositing process of receiving cash equivalent to the transaction amount (step S30). The cash handling apparatus 100 compares a deposited amount obtained through the depositing process with the transaction amount, and judges whether or not dispensing of change is necessary (step S31).

If the deposited amount is equal to the transaction amount (step S31; No), the cash handling apparatus 100 dispenses no change. For example, as shown in an example of transaction No. 6 in FIG. 8, in a case where cash handling with the coupon amount of 0 JPY has been performed and the customer has deposited coins equivalent to the transaction amount of 700 JPY into the cash handling apparatus 100, dispensing of change is not performed.

Meanwhile, if the deposited amount exceeds the transaction amount (step S31 in FIG. 7; Yes), the cash handling apparatus 100 performs a dispensing process of dispensing change equivalent to the difference between the deposited amount and the transaction amount (step S32), and the process ends. The change equivalent to an amount obtained by subtracting the transaction amount from the deposited amount is dispensed from the cash handling apparatus 100. For example, as shown in an example of transaction No. 7 in FIG. 8, in a case where the customer has deposited a 1,000-JPY note into the cash handling apparatus 100 in the situation where a coupon amount is 0 JPY and a transaction amount is 700 JPY, the cash handling apparatus 100 dispenses change coins equivalent to 300 JPY.

In a case where the use of the coupon 301 has been canceled in the middle, the cash handling apparatus 100 does not notify that the coupon 301 has been used. Thus, the coupon data shown in FIG. 4 is not updated. A completion notification (step S14 in FIG. 5) is transmitted to the POS register 400, as in normal cash handling performed without a coupon. That is, the completion notification indicating that the amount of cash actually deposited in the cash handling apparatus 100 has been handled as a deposited amount and the amount of cash actually dispensed from the cash handling apparatus 100 has been handled as a change amount, is transmitted.

The present embodiment shows a configuration in which the transaction system 1 includes: the POS system including the POS register 400 and the POS server 40; the cash handling apparatus 100; the coupon handling apparatus 200; and the coin depositing apparatus 300, and another configuration in which the transaction system 1 further includes the coupon management apparatus 500. However, these configurations are conceptually functional, and the configuration of the transaction system 1 may not necessarily be physically limited thereto. For example, the cash handling apparatus 100 may realize a part or all of the functions and operations of the above-described coupon handling apparatus 200. Any of the cash handling apparatus 100, the coupon handling apparatus 200, and the coin depositing apparatus 300 may realize a part or all of the functions and operations of the above-described coupon management apparatus 500. Distributed or integrated forms of each device are not limited to the above-described forms, and all or some of the forms may be distributed or integrated functionally or physically in any unit depending on various loads, use statuses, or the like.

As described above, although the embodiment of the cash handling apparatus 100 according to the present disclosure has been described with reference to the drawings, the configuration and operation of the cash handling apparatus 100 are not limited to the above embodiment, and may be carried out with various improvements, alterations, and modifications, based on the knowledge of those skilled in the art without departing from the spirit thereof.

## Claims

1. A cash handling apparatus (100) comprising:
a communication unit (140) configured to transmit and receive information to and from an external device;
a cash handling unit (10, 20) configured to perform cash handling including at least one of a depositing process and a dispensing process;
a control unit (150) configured to control the cash handling unit (10, 20) to perform the cash handling; and
an acquiring unit (200) configured to acquire coupon information of a coupon, wherein
when the control unit (150) has received, via the communication unit (140), a transaction amount of a transaction and an instruction for performing cash handling for receiving cash equivalent to the transaction amount,
the control unit (150) causes the cash handling unit (10, 20) to perform cash handling based on a coupon amount included in the coupon information acquired by the acquiring unit (200), the transaction amount, and an amount of cash deposited to the cash handling unit (10, 20).

2. The cash handling apparatus (100) according to claim 1, wherein
in a case where the coupon amount is equal to the transaction amount,
the control unit (150) notifies, via the communication unit (140), that the cash handling of receiving cash equivalent to the transaction amount has been completed, without causing the cash handling unit to perform the cash handling.

3. The cash handling apparatus (100) according to claim 1, wherein
in a case where the coupon amount is less than the transaction amount,
the control unit (150) causes the cash handling unit (10, 20) to perform cash handling for receiving cash equivalent to a shortfall amount obtained by subtracting the coupon amount from the transaction amount, and notifies, via the communication unit (140), that the cash handling of receiving cash equivalent to the transaction amount has been completed.

4. The cash handling apparatus (100) according to claim 1, wherein
in a case where the coupon amount exceeds the transaction amount and a setting allows for dispensing change when a coupon is used in the transaction,
the control unit (150) causes the cash handling unit (10, 20) to perform cash handling for dispensing change equivalent to an amount obtained by subtracting the transaction amount from the coupon amount, and notifies, via the communication unit (140), that the cash handling of receiving cash equivalent to the transaction amount has been completed.

5. The cash handling apparatus (100) according to claim 1, wherein
in a case where the coupon amount exceeds the transaction amount and a setting does not allow for dispensing change when a coupon is used in the transaction, the control unit (150) receives a selection of whether to continue or cancel use of the coupon, and
if a selection to continue the use of the coupon is received, the control unit (150) notifies, via the communication unit (140), that the cash handling of receiving cash equivalent to the transaction amount has been completed, without causing the cash handling unit to perform the cash handling, and
if a selection to cancel the use of the coupon is received, the control unit (150) causes the cash handling unit (10, 20) to perform cash handling for receiving cash equivalent to the transaction amount and notifies, via the communication unit (140), that the cash handling has been completed.

6. The cash handling apparatus (100) according to any one of claims 1 to 5, further comprising
a display (210) configured to display information on the transaction, wherein
after the control unit (150) receives the instruction for performing the cash handling for receiving cash equivalent to the transaction amount,
the control unit (150) causes the display (210) to display a screen for prompting input of coupon information into the acquiring unit (200), and identifies the coupon amount based on the coupon information input through the acquiring unit (200).

7. The cash handling apparatus (100) according to any one of claims 1 to 6, further comprising
a display (210) configured to display a screen for prompting input of coupon information, wherein
the control unit (150) identifies the coupon amount based on the coupon information input through the acquiring unit (200) before receiving the instruction for performing the cash handling for receiving cash equivalent to the transaction amount.

8. The cash handling apparatus (100) according to any one of claims 1 to 7, wherein
the acquiring unit (200) includes a reading unit (220), and
the control unit (150) identifies the coupon amount based on the coupon information read from the coupon by the reader (220).

9. The cash handling apparatus (100) according to claim 8, further comprising
an operation unit (210) configured to receive an operation performed by a customer, wherein
the control unit (150) causes the reader (220) to start reading the coupon information based on an operation performed through the operation unit (210).

10. The cash handling apparatus (100) according to claim 8, wherein
the control unit (150)
causes the reader (220) to read a coupon number from the coupon,
acquires the coupon amount based on the coupon number, via the communication unit (140), from an external device storing therein coupon data, in which coupon amounts of a plurality of coupons are registered in association with coupon numbers of the respective coupons, and
identifies the coupon amount.

11. The cash handling apparatus (100) according to claim 10, wherein
in the coupon data, change dispensing permission information indicating whether or not dispensing of change is allowed when a coupon amount exceeds a transaction amount, is registered in association with a coupon number of each coupon, and
the control unit (150) acquires the change dispensing permission information corresponding to the coupon number of the coupon used in the transaction, and determines whether or not to dispense change in the cash handling performed for the transaction, based on the acquired change dispensing permission information.

12. The cash handling apparatus (100) according to claim 10, wherein
in the coupon data, availability information indicating whether or not a coupon has been used is registered in association with a coupon number of each coupon, and
the control unit (150) notifies a coupon number of the coupon used in the transaction, via the communication unit (140), whereby the availability information corresponding to the coupon number is updated to used.

13. The cash handling apparatus (100) according to any one of claims 1 to 12, wherein
the coupon is issued by a coin depositing apparatus (300) configured to receive coins deposited by a customer and store the coins in the coin depositing apparatus (300), and
a coupon amount based on a total amount of the coins deposited in the coin depositing apparatus (300) by the customer is given to the coupon.

14. The cash handling apparatus (100) according to any one of claims 1 to 13, configured to
receive coins deposited by a customer and store the coins in the cash handling unit (10, 20), and
issue the coupon whose coupon amount is given based on a total amount of the coins deposited in the cash handling unit (10, 20) by the customer.

15. A cash handling method to be performed by a cash handling apparatus (100), the cash handling method comprising:
receiving, via a communication unit (140), a transaction amount and an instruction for performing cash handling for receiving cash equivalent to the transaction amount;
acquiring, by an acquiring unit (200), coupon information of a coupon; and
performing, by a cash handling unit (10, 20), cash handling, based on a coupon amount included in the coupon information acquired by the acquiring unit (200), the transaction amount, and an amount of cash deposited to the cash handling unit (10, 20).
